Europäisches Patentamt

European Patent Office

Office européen des brevets

(19)

(11) Veröffentlichungsnummer : **0 339 181 B1**

(12) **EUROPÄISCHE PATENTSCHRIFT**

(45) Veröffentlichungstag der Patentschrift :
**15.07.92 Patentblatt 92/29**

(21) Anmeldenummer : **89100860.9**

(22) Anmeldetag : **19.01.89**

51 Int. Cl.⁵ : **B29C 65/18, E02D 19/18**

(54) **Schweisspatrone.**

(30) Priorität : **28.04.88 DE 3814329**

(43) Veröffentlichungstag der Anmeldung :
**02.11.89 Patentblatt 89/44**

(45) Bekanntmachung des Hinweises auf die
Patenterteilung :
**15.07.92 Patentblatt 92/29**

(84) Benannte Vertragsstaaten :
**BE CH DE FR GB IT LI NL SE**

(56) Entgegenhaltungen :
**EP-A- 0 129 275**
**DE-A- 3 430 789**
**DE-C- 717 959**
**FR-A- 1 331 028**
**GB-A- 714 105**
**GB-A- 2 188 695**
**US-A- 4 217 886**

(73) Patentinhaber : **HÜLS TROISDORF**
**AKTIENGESELLSCHAFT**
**Postfach 11 65**
**W-5210 Troisdorf (DE)**

(72) Erfinder : **Schlütter, Aloys**
**Rheinstrasse 42**
**W-4152 Kempen 3 (DE)**
Erfinder : **Kaewert, Klaus**
**Gänsestrasse 4**
**W-4000 Düsseldorf 13 (DE)**
Erfinder : **Witolla, Christian**
**Fraunhoferstrasse 69**
**W-4100 Duisburg 17 (DE)**

EP 0 339 181 B1

## Beschreibung

Die Erfindung betrifft eine Schweißpatrone für die Verschweißung von Kunststoffabdichtungsbahnen in Erdschlitzen, wobei die Abdichtungsbahnen mit angeschweißten oder angeformten Randprofilen ineinandergreifen und die Schweißpatrone eine angeformte oder montierte Verdickung aufweist, mit der die Patrone durch die Randprofile hindurchgezogen oder hindurchgeschoben wird und dabei Material der Randprofile plastifiziert und in die Fugen der Randprofile drückt.

Erdschlitze haben zunehmende Bedeutung. Die Erdschlitze werden verwendet zur Absperrung wasserführender Erdschichten. Erdschlitze können auch verwendet werden zur Abdichtung von Teichen, von Kanälen usw. Besonders ins Gespräch gekommen sind Erdschlitze zur Abdichtung kontaminierten Erdreiches. Das Erdreich soll dabei gegen aufsteigendes Grundwasser bzw. eindringendes Oberflächenwasser geschützt werden.

Die Erdschlitze werden mit Baggern oder Fräsen soweit ausgehoben, bis ein bindiger Boden erreicht wird, der aus sich heraus ausreichende Abdichtungsfunktionen gewährleistet. Das kann zu Teufen von 50 m und mehr führen.

Beim Ausheben der Erdschlitze wird zugleich eine Stützmasse, in der Regel Bentonit, in Form einer Suspension eingefüllt. Die Stützmasse verhindert ein Zusammenbrechen des Erdschlitzes.

Die Stützmasse hat, wenn sie aus Bentonit oder vergleichbaren Suspensionen besteht, zugleich eine Dichtfunktion. Die Dichtfunktion kann durch Zusätze von Zement gesteigert werden.

Insbesondere für Abdichtungsvorhaben bei kontaminiertem Erdreich wird gefordert, daß in die Erdschlitze Kunststoffabdichtungsbahnen eingezogen werden. Das geschieht in der Form, daß die Bahnen einzeln und nacheinander mit geeigneten Werkzeugen von oben durch die Suspension hindurch bis nach unten in den Fuß der Erdschlitze gezogen werden.

Bei den Kunststoffabdichtungsbahnen stellt sich dann das Problem der Randabdichtung. Dazu ist es bekannt, die Abdichtungsbahnen an den Rändern mit Randprofilen (Schlössern) zu versehen. Mit den Randprofilen haben die Kunststoffabdichtungsbahnen Ähnlichkeit mit den im Tiefbau üblichen Spundbohlen. D.h. die Kunststoffabdichtungsbahnen werden mit den Randprofilen in gleicher Weise ineinandergeschoben wie Spundbohlen beim Eintreiben in das Erdreich ineinandergeschoben werden. Im Unterschied zu den Spundbohlen haben die Kunststoffabdichtungsbahnen jedoch keine Eigensteifigkeit, die es erlaubt, die Abdichtungsbahnen am hinteren Ende zu schieben. Die Kunststoffabdichtungsbahnen werden deshalb am vorderen Ende gezogen. Für das Ziehen sind geeignete Rahmen vorgesehen, die mit einem Kran zu bedienen sind.

Während Spundbohlen nach dem Ineinanderschieben an der Verbindungsstelle unverändert bleiben, ist bei Kunststoffabdichtungsbahnen nach einem älteren Vorschlag vorgesehen, durch die Randprofile in Längsrichtung eine Schweißpatrone hindurchzuziehen. Für das Hindurchziehen eignet sich eine Öffnung andergeschoben. Diese Randprofile sind derartig groß ausgelegt, daß die Randprofile mit einem Schweißgerät durchfahren werden können, daß aus keilförmigen Heizplatten besteht.

Nach einem älteren Vorschlag ist als Alternative zu den vorstehend beschriebenen keilförmigen Heizplatten eine Schweißpatrone entwickelt worden, die in Längsrichtung der Randprofile durch einen Spalt der Randprofile gezogen wird. Dabei wird im Spalt thermoplastisches Material aufgeschmolzen und umgeformt.

Für das Hindurchziehen eignet sich eine Öffnung in den Randprofilen, die nach älteren Vorschlägen zum Injizieren von Kunstharzen und/oder zum Einlegen von Dichtschnüren bzw. Dichtschläuchen vorgesehen war.

Die Schweißpatrone ist vorzugsweise mit einer Hülse umgeben, die zumindest in Bewegungsrichtung vorne eine der Öffnung angepaßte Öffnungsweite aufweist. D.h. die Verdickung befindet sich in Bewegungsrichtung der Schweißpatrone hinter deren Spitze, vorzugsweise im letzten Drittel der Hülse. Dadurch entsteht eine Spitze mit großer Führungswirkung. Dies ist von Vorteil, um einem Verlaufen der Schweißpatrone im Kunststoffrandprofil entgegenzuwirken.

Die Verdickung bewirkt ein Aufschmelzen von Material und zugleich eine Verdrängung des aufgeschmolzenen Materials. Das Material fließt in die Dichtfugen zwischen den Randprofilen bzw. wird in diese Fugen gedrückt. Dort kommt es zu einer relativ schwachen Schweißnaht. Gleichwohl wurde diese Schweißnaht bislang als ausreichend angesehen, weil die Schweißverbindung keine mechanischen Kräfte aufnehmen muß, wenn die Kunststoffabdichtungsbahnen mit den Randprofilen in einer aushärtenden Bentonit/Zementsuspension eingebettet sind.

Es hat sich jedoch gezeigt, daß mechanische Belastungen bereits vor dem Aushärten der Suspension auftreten. Das gilt vorzugsweise für das Ineinanderschieben der Profile.

Der Erfindung liegt daher die Aufgabe zugrunde, die Schweißnaht zu verbessern. Dabei geht die Erfindung von der Überlegung aus, daß die bisherige geringe mechanische Festigkeit der Schweißnaht darauf zurückzuführen ist, daß das aufgeschmolzene Material in der Fuge auf kalte Flächen trifft.

Nach der Erfindung wird die Schweißnaht dadurch verbessert, daß in Bewegungsrichtung vor der Verdickung an der Schweißpatrone Flügel vorgesehen sind, die zumindest teilweise in die Fugen ragen. Diese Flügel

2

bewirken eine Aufheizung der Fugenflächen. Dadurch kann das aufgeschmolzene Material mit den Fugenflächen eine vorteilhafte Schweißverbindung eingehen.

In weiterer Ausbildung der Erfindung besitzen die Flügel ein geringes Übermaß gegenüber der Spaltöffnung der Dichtfugen. Das hat bei aufgeheizten Flügeln zur Folge, daß die Fugenflächen angeschmolzen und das vorhandene Material in den Fugen nach außen gedrückt wird. Mit diesem Vorgang werden zugleich alle vorhandenen Schmutzpartikel, die an den Fugenflächen eine Schweißverbindung beeinträchtigen können, abgeräumt.

Schließlich ist es von großem Vorteil, wenn die Flügel in einem Abstand von der Verdickung angeordnet sind. Der Abstand wird während des Betriebes der Schweißpatrone durch aufgeschmolzenes Material ausgefüllt. Zugleich entsteht in dem Raum zwischen den Flügeln und der Verdickung je nach Abmessungen (Abstand der Flügel von der Verdickung, Maß der Verdickung und Öffnungsweite der in den Randprofilen vorhandenen Öffnung sowie Spaltöffnung der Dichtfugen) ein Druck, der die Qualität der Schweißverbindung noch beträchtlich verbessert.

In der Zeichnung ist ein Ausführungsbeispiel der Erfindung dargestellt.

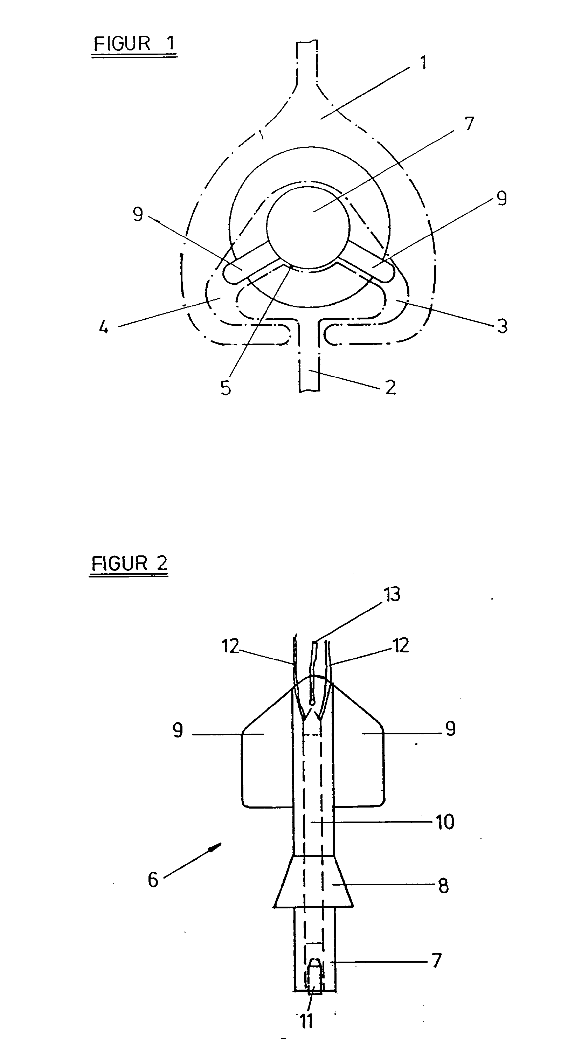

In Figur 1 sind mit 1 und 2 zwei Randprofile bezeichnet, die strichpunktiert dargestellt sind. Das Randprofil 2 ist im Querschnitt pfeilartig ausgebildet, während das Randprofil 1 die pfeilartige Spitze umfaßt. Dabei bleiben Dichtfugen 3 und 4 sowie mittig eine Öffnung 5 frei. Die Randprofile 1 und 2 sind im Ausführungsbeispiel mit nicht dargestellten Hochdruckpolyäthylen-Abdichtungsbahnen verschweißt bzw. bestehen aus dem gleichen Werkstoff.

Figur 2 zeigt eine erfindungsgemäße Schweißpatrone 6. Die Schweißpatrone 6 besitzt eine Hülse 7 mit einer Verdickung 8 in der hinteren Hälfte. In der vorderen Hälfte sind beiderseits der Hülse 7 zwei Flügel 9 vorgesehen.

Der Durchmesser der Hülse 7 ist so bemessen, daß die Hülse 7 mit ausreichendem Spiel spurgetreu in der Öffnung 5 deren Profile 1 und 2 gleiten kann. Die Flügel 9 sind so angeordnet, daß sie in die Dichtfugen 3 und 4 ragen. Im Ausführungsbeispiel besitzen die Flügel 9 ein geringes Übermaß gegenüber der Spaltbreite der Dichtfugen 3 und 4.

In der Schweißpatrone 6 bzw. deren Hülse 7 ist eine Bohrung 10 vorgesehen. Die Bohrung 10 dient der Aufnahme einer Heizpatrone und ist als Sackloch ausgebildet, welches am offenen Ende mit einem Bolzen 11 verschlossen ist.

Der Heizpatrone wird elektrische Energie über Kabel 12 zugeleitet. Ferner kann in die Heizpatronnen eine Temperaturmessung integriert sein bzw. ein Temperaturfühler an anderer Stelle in der Heizpatrone vorgesehen sein. In diesem Fall verläuft parallel zu den Kabeln 12 ein Meßkabel des Temperaturfühlers.

Die Heizpatrone wird mit einem Stahlseil 13 gezogen. Die Vorschubgeschwindigkeit ist abhängig von der Erwärmung der Heizpatrone bzw. der Schweißpatrone und von den Abmessungen.

Beim Durchziehen der Schweißpatrone 6 durch die Randprofile 1 und 2 räumen die Flügel 9 zunächst die Dichtfugen 3 und 4 sauber. Dabei verbleiben erwärmte Dichtflächen. Die nachlaufende Verdickung 8 bewirkt infolge ihrer Temperatur und Abmessungen eine Aufschmelzung des die Öffnung 5 umgebenden Materialbereiches. Zugleich wird das aufgeschmolzene Material wie ein Pfropfen vorgeschoben und in die Dichtfugen 3 und 4 gedrückt. Dabei entsteht eine vorteilhafte Verschweißung, weil die Schweißflächen erwärmt und das auftreffende, geschmolzene Material einen Druck entfaltet.

**Patentansprüche**

1. Schweißpatrone (7) für die Verschweißung von Kunst stoffabdichtungsbahnen in Erdschlitzen, wobei die Abdichtungsbahnen mit angeschweißten oder angeformten Randprofilen (1, 2) ineinandergreifen und die Schweißpatrone (7) eine angeformte oder montierte Verdickung aufweist, mit der sie durch die Randprofile (1, 2) hindurchgezogen oder hindurchgeschoben wird und dabei Material der Randprofile plastifiziert und in die Dichtfugen der Randprofile drückt, dadurch gekennzeichnet, daß in Bewegungsrichtung vor der Verdickung (8) Flügel (9) an der Patrone vorgesehen sind, die zumindest teilweise in die Dichtfugen (3, 4) ragen.

2. Schweißpatrone nach Anspruch 1, dadurch gekennzeichnet, daß die Flügel (9) gegenüber den Dichtfugen (3, 4) ein geringes Übermaß aufweisen.

3. Schweißatrone nach Anspruch 1 oder 2, dadurch gekennzeichnet, daß die Flügel (9) einen Abstand von der Verdickung (8) aufweisen.

**Claims**

1. Welding cartridge (7) for welding (sealing) plastics sealing sheets in soil trenches, wherein the sealing sheets engage into one another with welded-on or integrally formed edge profiles (1, 2) and the welding cartridge (7) possesses an integrally formed or fitted-on thickened zone, with which it is pulled or pushed through the edge profiles (1, 2) and plasticizes material of the edge profiles and presses this material into the sealing joints of the edge profiles,
characterized in that
blades (9) are provided on the cartridge in front of the thickened zone (8) in the direction of travel, these blades projecting at least partly into the sealing joints (3, 4).

2. Welding cartridge according to Claim 1, characterized in that the blades (9) are of slightly larger dimensions than the sealing joints (3, 4).

3. Welding cartridge according to Claim 1 or 2, characterized in that the blades (9) are at a distance in front of the thickened zone (8).


**Revendications**

1. Cartouche de soudage (7) destinée au soudage de nappes d'étanchéité en matière plastique dans des tranchées du sol, les nappes d'étanchéité s'imbriquant les unes dans les autres au moyen de profilés de bordure (1, 2) rapportés par soudage ou formés sur les nappes, et la cartouche de soudage (7) comportant un renflement qui y est formé ou monté, à l'aide duquel elle est tirée ou poussée au travers des profilés de bordure (1, 2), en rendant à cette occasion plastique le matériau des profilés de bordure et en le repoussant dans les interstices d'étanchéité des profilés de bordure,
caractérisée en ce que
des ailettes (9) sont prévues sur la cartouche, à l'avant du renflement (8) en se référant à la direction de déplacement, ces ailettes s'engageant au moins en partie dans les interstices d'étanchéité (3, 4).

2. Cartouche de soudage selon la revendication 1, caractérisée en ce que les ailettes (9) présentent une dimension légèrement supérieure aux interstices d'étanchéité (3, 4).

3. Cartouche de soudage selon la revendication 1 ou 2, caractérisée en ce que les ailettes (9) sont situées à une certaine distance du renflement (8).

FIGUR 1

FIGUR 2